# EUROPEAN PATENT SPECIFICATION

(11) **EP 1 011 182 B1**
(45) Date of publication and mention of the grant of the patent: **05.10.2005**
(21) Application number: 98123733.2
(22) Date of filing: 14.12.1998
(51) Int. Cl.: H02G 13/00, F03D 11/00

(54) **Lightning protection apparatus for a longitudinal member**
Blitzschutzvorrichtung für längliche Körper
Dispositif de protection antifoudre pour élément allongé

(43) Date of publication of application: 21.06.2000
(73) Proprietor: MINNESOTA MINING AND MANUFACTURING COMPANY, Minnesota 55133-3427 (US)
(72) Inventor: Dencker, Jesper Heiring, 1452 Copenhagen, K (DK)
(74) Representative: Hilleringmann, Jochen

(56) References cited:
- EP-A- 0 707 145
- EP-A- 0 718 495
- DE-C- 19 748 716
- US-A- 2 982 494
- US-A- 5 841 066

## Description

The invention relates to a lightning protection apparatus for a rotor blade of a wind turbine comprising an electrical conductor arranged along the length of the rotor blade and covered by a abrasion-resistant protective layer.

Beside rotor blades of wind turbines, examples of elongated members which typically have low electrical conductivity, are in contact with the ground, and consequently need to be protected from damage by lightning strike, are flagpoles, tall buildings etc. The natural events of lightnings have been investigated in detail. About one third of the lightning strokes are so-called "forked" lightnings, cloud-to-ground, or "ground strokes" which are the ones that are most relevant for damages. These strokes can have positive and negative polarity which is varying from area to area and also depends on the intensity of the stroke. It has been found that about 49 % of these strokes have currents up to 40.000 Amps, 49 % between 40.000 and 200.000 Amps and only 2 % above 200.000 Amps. The voltages can vary between 100.000 volts and 2 million volts. This is the typical basis for tests conducted at laboratories. Protection is widely reported to be appropriate if a system can withstand currents up to 200.000 Amps. For example, on buildings it is known to arrange an electrical conductor in the form of a steel wire with a diameter of about 1 cm to conduct the electrical charges of the lightning into the ground.

One area where lightning strike protection is particularly important are rotor blades on wind power stations. Such wind turbines are installed to a growing extent for purposes such as generating electrical power, typically in areas in which the weather conditions ensure streams of wind over significant periods of time during the year combined with dramatic changes in structure heights on ground, arising 40 to 50 meters. The most frequent damages occurring with the rotor blades of these wind turbines are caused by electrical lightnings.

Typically the wind turbines are provided with several rotor blades which are generally hit by a lightning strike when they are in the corresponding upper position. Most likely this occurs at the tips of the blades which are typically made of a non-conductive plastic material, especially glass-fiber reinforced plastic (GRP). The strokes can damage these blades so seriously that they either have to undergo an expensive repair or in the worst case that they have to be completely replaced. Lightning strokes affect the entire construction of the wind turbine and the rotor blades are the second most likely items to be damaged after the electronic system.

Due to the increasing number and size of these wind turbines this has become a significant factor. In the meantime solutions have been identified which to some extent provide a protection against lightning strikes using the conventionally known internal techniques to guide the electrical charges to the ground.

Solutions described in the prior art provide an electrical conductor which conducts the electrical charge of the lightning to the ground. The electrical conductor has to have a cross section large enough to withstand a current up to 200.000 Amps.

DE-A-44 36 197 (Wobben) describes a wind power station for the generation of electrical energy in which the blades at their two longitudinal sides are provided with conductive components which towards the hub are arranged in a manner so that continuously a small air gap is created between parts of the conductive components and an arrangement in the tower-type stand that allows a direct electrical connection to the ground. In case of a lightning strike the charges are transferred over this spark gap or discharging distance to the ground. The conductive portions of the blades have cross sections in the order of 100 sq.mm.

WO-A-96/07825 (Bonus Energy) relates to a similar approach. One or several conductive rods project from the tip of the rotor blade which are electrically connected to a solid conductor which is arranged inside the blade and which can carry the charges from a lightning strike to a spark gap arranged near the hub. It is particularly referred to the fact that the internal arrangement of the conductor inside the blades prevents problems of using external conductors as those need to have a high cross section and could cause noise and reduce the efficiency. Such a construction, although quite effective in preventing damage caused by lightning strikes, is also quite expensive to manufacture. It is not possible to retrofit existing systems with this apparatus.

EP-A-0 707 145 and EP-A-0 718 495 (Autoflug Energietechnik GmbH) refer to a lightning protection apparatus in which several longitudinal stripes made of copper mesh are arranged at the rotor blades. The longitudinal stripes are connected between each other by additional stripes perpendicularly arranged to the main ones. The purpose of this arrangement is to reduce the current density as much as possible while conducting the charge of the lightning strike. In order to achieve the desired reduction in current density, the cross sections of the wires forming the mesh are added up to produce a large cross section which can safely conduct the charge to the ground. No reference is made to the way of fixing the mesh to the blades.

Generally, there are conflicting demands in the design of the conductor. Conductors of large cross section are desirable to conduct the lightning safely. On the other hand, bulky constructions are to be avoided, especially on rotor blades, where the aerodynamic properties are important. Additionally, although it is desirable to include the electrical conductor inside the rotor blade, this is quite complicated and expensive. Especially, the lightning protection apparatus of the prior art are not adapted to be used to retrofit existing members at site, like rotor blades on existing wind turbines.

It is therefore the object of the invention to improve the concept of an electrical conductor arranged along the length of a rotor blade of a wind turbine to provide a lightweight non-reflective lightning protection apparatus which is inexpensive and simple to affix to the rotor blade, yet effective in preventing damage caused by lightning strike.

This object is achieved by the lightning protection apparatus according to claim 1 or 15, respectively, and by the use of a tape as described in claim 16. Dependent claims relate to preferred embodiments.

The lightning protection apparatus according to claim 1 is characterized in that the conductor is an electrically conductive layer of a tape, having also an adhesive layer, which tape is attached to the outer surface along the length of the rotor blade by means of the adhesive layer, and that the electrically conductive layer is covered by an abrasion-resistant protective layer.

Instead of using known constructions of lightning protection equipment, which have to be fixed to the rotor blade by suitable holding mechanisms, the lightning protection apparatus according to the invention is of a much more simple, yet effective structure which offers substantial advantages over the prior art. In the invention, lightning protection is applied externally, i.e. to the outer surface of the rotor blade in order to leave out the rise of air expansion cracks in hollow constructions caused by the high temperature evaporation of present humidity when a lightning is guided internally through the rotor blade. According to the invention, a tape is used which contains a layer of electrically conductive material. There are numerous ways in which such a conductive layer can be built, which will be discussed further on. The tape also comprises an adhesive layer. The type of adhesive used depends on the environmental conditions of the place where the tape is used. In particular, an electrically conductive adhesive can be used.

The tape of the lightning protection apparatus according to the invention can be easily applied to the outer surface of the rotor blade and remains attached thereto by means of the adhesive layer. There are no modifications necessary to the rotor blade, such as holes or grooves in which the conductor is guided. There are also no further means necessary for fixing the tape to the rotor blade, such as screws, holders etc. The tape has the shape of a flat, longitudinally extending strip and can be applied at any smooth surface of the rotor blade.

Electrically conductive tapes already exist. For example, the Scotch (TM) 1190 metalized shielding tape with conductive adhesive, available from 3M Company, St. Paul, Minnesota, USA, originally intended to be used for EMI-shielding, can be used to provide lightning protection to a rotor blade of a wind turbine.

For protection of the electrically conductive layer disposed under severe environmental conditions and thus subjected e.g. to erosion by wind or particles, such as sand, the lightning protection apparatus of the invention comprises an abrasion-resistant protective tape with an adhesive layer, the protective tape covering the tape comprising the electrically conductive layer. In one embodiment of the invention, after applying the first tape, comprising the conductive layer, to the surface of the rotor blade, a second tape is attached on top of the first tape. The second tape is an abrasion-resistant tape, which covers the first tape and protects it from wear and damage due to environmental influences, such as erosion by particles.

Instead of using two tapes which are applied one on top of the other, it is also possible to provide a laminated tape already consisting of an adhesive layer, an electrically conductive layer and an abrasion-resistant protective layer.

Preferably, the abrasion-resistant protective layer (or tape) is wider than the strip of electrically conductive material and overlaps the strip along both of its side edges.

The protective layer (if one tape comprising all three layers is used) or the protective tape (if two tapes are used one on top of the other) thus provides excellent protection of the strip of electrically conductive material and also serves to firmly fix the strip of electrically conductive material to the surface of the rotor blade. The protective tape or a layer can also protect the rotor blade itself from wear due to environmental influences. Especially when applied to the leading edge of the rotor blade, the abrasion-resistant tape or layer can effectively protect the rotor blade from erosion and abrasion caused by particles in the air. Leading edge erosion damage on wind turbine blades has shown a loss of production of 25 %.

One example for a protective tape which could be used is 8681 HS polyurethane protective tape available from 3M Company, St. Paul, Minnesota, USA, which is an abrasion and erosion resistant polyurethane tape with an acrylic adhesive mainly used on helicopter rotor blades. This tape has a total thickness of about 0.36 mm. Generally, a protective layer out of polyurethane material with a thickness in the range of 0.2 mm to 1 mm has been found useful. Preferably, the protective layer is of a thickness of about 0.3 mm.

As an alternative, according to the invention, the lightning protection apparatus comprises a film of a material layer which can be adhered to an element to be protected by means of a layer of adhesive material which is electrically conductive.

Accordingly, the conductive layer of the tape according to this alternative of the invention is provided as an adhesive layer. The material layer of the film serves as a support or backing layer for the adhesive material as well as for a cover layer for protecting the adhesive layer.

The new apparatus provides significant advantages over the prior art. Although it is common to provide an electrical conductor by which the electrical charges of the lightning are led to the ground, such a conductor has never before been provided in shape of a conductive layer of a tape adhered to an element to be protected.

Although US-A-5,841,066 (Bocherens), US-A-4,352,142 (Boeing), and US-A-2,982,494 (Amason) each describes a lightning protection system for an aircraft including layers of aluminum foil placed onto the non-conductive structure of aircraft components, this construction is not comparable to the invention. By principle, the potential differences occurring at a lightning strike on a plane are considerably less than on a grounded configuration, so that the aircraft being in the air is subjected to lower currents as a consequence of the lower potential differences. Also, the problem posed here is completely different: while for a rotor blade which is connected to the ground and is struck at its tip, a way has to be provided to safely guide the lightning charges into the ground, in an aircraft, the main objective is to avoid damages from thermal and right-angle effects of the lightning at the point where it strikes the aircraft component. Moreover, a multilayer laminate covering the whole surface of an aircraft wing as disclosed in US-A-4,352,142 (Boeing), is not comparable to an adhesive tape as used according to the invention, which is only applied on a part of the surface. The tape used according to the invention does not cover therotor blade, but only provides a path for the electrical charges along the length of the rotor blade.

In EP-A-0 776 623 (Eurocopter, France) and US-A-3,923,421 (United Technologies Corporation) lightning protection apparatus are described for helicopter blades, where also the requirements are in principle different from constructions on the ground as the potential differences are in principle smaller.

The lightning protection apparatus according to the invention can be very easily used to retrofit existing, formerly unprotected rotor blades of wind turbines The tape, because of its flat and conformable structure and good adhesion to the surface of the rotor blade, can be arranged so that it does not affect the aerodynamic properties of the rotor blade substantially. The tape with the electrically conductive layer is applied along the length of the rotor blade, preferably covering the leading edge. Electrical charges from a lightning striking the tip of the blade are guided by the electrically conductive layer to the hub, where the rotor blade is fixed. Conventionally known systems including a spark gap (e.g. DE-A-44 36 197 or WO-A-96/07825) can be employed to further guide the electrical charges to the ground. Known lightning protection systems for wind turbine can easily be used in combination with the lightning protection system according to the invention.

The electrically conductive layer can provide a cross section large enough to conduct currents of up to 200.000 Amps. According to a preferred embodiment of the invention, however, the conductive layer provides such a configuration of its geometry and electrical properties, that in the event of a lightning strike the electrically conductive layer guides the lightning charges along its surface, while at least a part of the electrically conductive layer evaporates.

This is a new concept of providing lightning protection to a rotor blade connected to the ground. While prior art concepts invariably aim at conducting the electrical charges through a conductor with a cross sectional area large enough to conduct the charges, the configuration according to the preferred embodiment provides a conductive layer that is quite thin and therefore by comparison only provides a small cross section, but a large surface. As a lightning strikes the rotor blade, it is attracted by the electrically conductive layer because of the conductivity thereof.

A thin layer of conductive material does not provide enough cross section to effectively conduct the charges. This is why the conductive layer evaporates as a part of the electrical charges pass through it. Experiments have shown, that the charges nevertheless follow the path of the electrically conductive layer. The lightning is therefore guided along the surface of the tape and follows the tape along the length of the rotor blade. Although some conductive layer of the tape is destroyed, the surface of the rotor blade to which the tape is attached remains undamaged.

The flat structure provided by the adhesive layer is very advantageous for this guiding effect. Although already a very thin copper wire could achieve a guiding effect, lightning tends to jump statistically while it is guided along the rotor blade. On the surface of a flat structure such as the adhesive layer of the tape, the electrical charges still jump certain distances, but do not leave the path prescribed by the tape and are thus guided by the tape along the surface of the rotor blade.

Because of the statistical nature of lightning strikes, it is very hard to give exact limits under which the above-described surface-guiding effect is achieved. For lightnings of low intensity, e.g. 40.000 Amps, even a thin conductive layer may still be able to conduct the electrical charges without the tape being destroyed. Some lightning strikes, on the other hand, may be of such high voltages that even the formerly known structures of the prior art would, at least in part, evaporate while conducting the lightning to the ground.

While therefore it is hard to exactly define the geometry and electrical properties necessary to always achieve the above-mentioned surface guiding effect, the new concept provides a significant new approach to the design of a conductor, since it no longer has to be designed to be able to withstand the current generated by a lightning strike and conduct the electrical charges. The geometry of the conductor may thus vary considerably.

Configurations found useful in experiments are a thickness of the conductive layer of 0.05 to 0.5 mm. Especially a thickness of the conductive layer of about 0.1 mm is preferred. For the width of the conductive layer, a strip of 1 to 10 cm extending along the length of the tape has been found useful. Especially preferred is a strip of a width of about 3 to 7 cm and, in particular, of about 4 cm.

After a lightning strike, which is guided along the rotor blade by the electrically conductive layer, thereby destroying at least parts of the layer, the tape can easily be repaired or the remaining parts of the tape can be removed to replace them by new tape.

It is an advantageous property of the tape that it is flexible and therefore able to adjust to deformations of the rotor blade, such as bending of the rotor blades caused by wind. For achieving a flexible tape, the electrically conductive layer of the tape can be formed as a mesh of thin metal wires. It is also possible to form the electrically conductive layer of the tape as a film of metal material. Also suitable constructions comprise electrically conductive layers comprising metal particles dispersed in a polymer layer.

The electrically conductive layer of the tape of the lightning protection apparent according to the invention preferably is of metal material, forming a strip extending along the length of the tape. The strip has a width which should be large enough to ensure that the lightning charges guided on the surface do not deviate from the path prescribed by the tape when they statistically jump. The electrically conductive layer should be of a conductivity several orders of magnitude higher than the electrical conductivity of the rotor blade, since lightning is always attracted towards bodies of higher conductivity. Thus, by applying a strip of metal material on a non-conductive rotor blade such as a fiber glass rotor blade, the lightning can be effectively guided. Although an electrically conductive layer of copper material is preferred, other conductive materials such as aluminum, steel or any other electrically conductive material known to the person skilled in the art could be used. It has been found useful, that the conductive layer has a surface resistance of less than 0.1 Ω per square.

Some of the rotor blades on wind turbines are provided with a so-called "tip brake". In this case, a rotor blade is divided up in sections which are mechanically separated from each other and can be rotated around an axis in the lengthwise direction of the rotor blade. On these rotor blades, it is not possible to apply the tape without any interruption, because this would prevent the rotating movement of the sections against each other. In this case, it has been found useful to divide the tape in two sections, each attached to one section of the rotor blade, which tape sections are separated from each other forming a gap at the joint connecting the sections of the rotor blade. Usually the tape is applied in a way such that when the sections of the rotor blade are in a normal position, the ends of the tape sections are in close proximity to each other. Thus, there is only a small gap and a lightning guided by the electrically conductive layer of the tape can easily jump the distance of gap and is thus safely led along both sections of the tape.

When the sections of the rotor blade are rotated against each other to form, e.g., a 45° angle, the ends of the tape sections form a larger gap. It has been found that the electrical charges also jump this larger distance.

As mentioned above, according to an alternative of the present invention, the conductive layer of the tape is its adhesive layer which in this case is electrically conductive. All what is said above with regard to the conductive layer of the tape also applies for a tape in which the adhesive layer is electrically conductive.

By means of the invention, it is possible to easily provide lightning protection on the rotor blade of a wind turbine. For performing this it is merely necessary
- to provide a tape comprising an electrically conductive layer, an adhesive layer, and an abrasion-resistant protective layer covering the electrically conductive layer, and
- to apply the tape on the outer surface along the length of the rotor blade, the adhesive layer sticking to the surface of the rotor blade.

As an alternative, a lightning protection on a rotor blade can be provided easily in that an adhesive tape is used comprising an electrically conductive adhesive layer adhered to the surface of the rotor blade and an abrasion-resistant protective layer covering the adhesive layer.

After a lightning strike was guided along the lightning protection tape applied to the rotor blade, at least those portions of the tape (electrically conductive layer and/or electrically conductive adhesive) which are damaged due to the lightning strike can be easily removed and replaced by applying a new tape. Accordingly, the lightning protection of the invention is designed for as to be damaged when a lightning strike is guided resulting in preventing the rotor blade from being damaged.

Preferably, after a lightning strike was applied to the tape, all of the tape irrespective of being damaged or not is removed from the rotor blade so as to apply new tape to the outer surface of the rotor blade.

The tape most preferably is provided as a roll from which the tape prior to application to the rotor blade can be easily wound up.

Preferred embodiments of the present invention will be described in detail with reference to the drawings, where throughout the Figures like numerals refer to like parts. In the Figures,
- Fig. 1: shows a perspective view of a wind turbine with a turbine comprising a rotor with three rotor blades,
- Fig. 2: shows a view of the cross section taken along line II-II in Fig. 1,
- Fig. 3: shows a cross sectional view of a tape applied to a rotor blade according to a first embodiment of the invention,
- Fig. 4: shows a cross sectional view of a tape applied to a rotor blade according to a second embodiment of the invention,
- Fig. 5: shows a perspective view of a rotor blade of a turbine being struck by lightning.

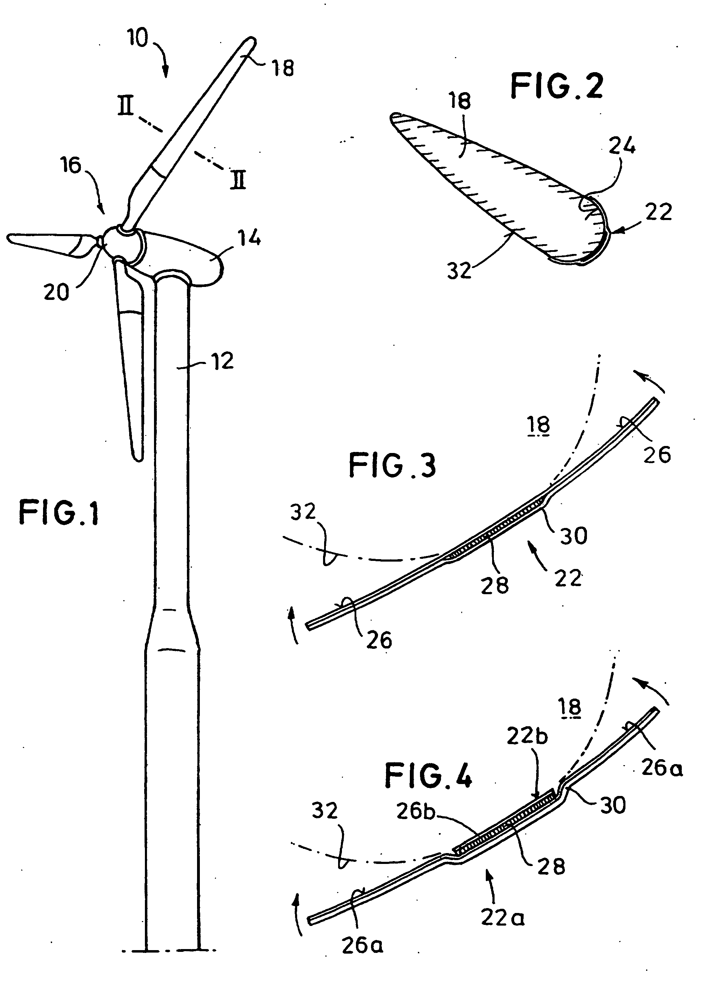

In Fig. 1 is shown a wind power station 10 including a stand 12 which carries a turbine 14 at its top. On the turbine 14 there is rotatably mounted a rotor 16 comprising three rotor blades 18 mounted on a hub 20. This configuration of a wind power station 10 is a typical configuration which is shown here only as an example used for illustration purposes. The specifics regarding the stand 12, the turbine 14 and the rotor 16 will not be discussed here, but are known to the skilled person.

Generally, the tower-type stand 12 is grounded, i.e. there is an electrical conductor of large cross section arranged along its length or the stand itself is made of conductive material, such as metal. The hub 20 consists of metal material and in normal operation is electrically isolated from the ground. There are, however, provisions to conduct electrical charges resulting from a lightning strike from the hub 20 over the stand 12 into the ground. Such provisions include configurations such as spark gaps described inter alia in DE-A-44 36 197 or EP-A-0 707 145. The apparatus described here is not a turbine protection system, but a protection system for the rotor blades 18. Therefore, the following description will only be concerned with a single rotor blade and way of applying an electrical conductor to such a rotor blade 18 to guide electrical charges toward the hub 20.

The rotor blade 18 is made of glass-fiber reinforced plastic (GRP), a non-conductive plastic material. The total length of the rotor blade 18 is 25 m. The rotor blade 18 here serves as an example for a rotor blade on which lightning protection has to be provided.

In Fig. 2, which shows a cross sectional view of the rotor blade 18, is shown a tape 22 applied to the outer surface 32 of the rotor blade 18 along the leading edge 24, i.e. the edge which usually faces in the wind direction.

The tape 22 is an adhesive tape with a layered structure, which is shown in detail in Fig. 3. The tape 22 consists of an adhesive layer 26, an electrically conductive layer 28 and protective layer 30. The tape 22 sticks to the outer surface 32 of the rotor blade 18 by means of the adhesive layer 26. The adhesive is an acrylic adhesive which ensures excellent bond strength to the surface 32. The acrylic adhesive is a long-aging, solvent resistant, pressure sensitive adhesive which provides good peel strength.

The electrically conductive layer 28 is formed as a mesh of very thin copper wires. This layer is thus flexible and does not break when the tape 22 is bent or stretched (e.g. during movement of the rotor blade 18 or when the tape 22 is wound in a roll). The thickness of the conductive layer 26 is preferably of about 0.1 mm. In different embodiments, the thickness may vary considerably for example in the range of about 0.05 to 0.5 mm. The surface resistivity of the conductive layer in the preferred embodiment is below 0.1 Ω per square. In principal, every conductive tape with a surface resistivity in the same order of magnitude can be used. It is, however, important that the conductivity of the conductive tape is significantly larger than the conductivity of the rotor blade.

The electrically conductive layer 28 forms a strip of constant width along the length of the rotor blade 18. The width of this strip is 38 mm in a preferred embodiment. It has been proven in tests that even a width of 1 cm or even less could be sufficient to guide the electrical charges, but as the width of the strip gets smaller, the danger of the electrical charges leaving the path prescribed by the tape is increased. The upper limit for the width of the strip is mainly determined with consideration to cost and handling. Strips preferably up to a width of 10 cm can be used.

Generally, thickness, width and conductivity of the electrically conductive layer should be chosen and proved in tests to ensure that for the majority of lightning strikes (e.g., below 200 kA) are safely guided to ground, so that the rotor blade remains undamaged.

The protective layer 30 is an abrasion resistant layer of polyurethane material. It has a thickness of 0.36 mm and is considerably wider than the electrically conductive layer 28, which it overlaps along both of its side edges. The protective layer 30 is 30 cm wide. It is laminated to the electrically conductive layer 28.

Fig. 4 shows an alternative embodiment, in which two tapes 22a,22b are applied on top of each other. The tape 22b is Scotch 1190 metalized fabric shielding tape available from 3M Company, St. Paul, Minnesota, USA, which is sold as a tape for EMI-shielding. The conductive layer 28 of the conductive tape 22b consists of a metalized fabric, which is coated with a conductive acrylic adhesive forming an adhesive layer 26b. This material provides a high level of conductivity in an extremely strong yet lightweight and conformable material. Protective tape 22a is 8681 HS polyurethane protective tape available from 3M Company, St. Paul, Minnesota, USA, consisting of exceptionally tough abrasion and erosion resistant polyurethane. The total thickness of the protective tape 22a is 0.36 mm. Tape 22a includes an adhesive layer 26a by means of which protective tape 22a sticks both to the surface 32 of the rotor blade 18 and the back of tape 22b.

Tapes 22a and 22b each are delivered in rolls with a release liner covering the adhesive layers. First, conductive tape 22b is applied to the surface 32 of the rotor blade 18 along the leading edge 24 of the rotor blade 18 by removing the release liner and applying tape 22b to the surface 32. Then, protective tape 22a is applied on top of tape 22b, covering both tape 22b and the leading edge 24 of the surface 32 of rotor blade 18.

Protective tape 22a or protective layer 30 of tape 22 serve to protect the surface 32 of rotor blade 18 against erosion caused by contact with particles transported in the air, such as sand. Protective layer 30 or protective tape 22a also help to firmly fix conductive layer 28 or conductive tape 22b on the leading edge 24 of the rotor blade 18.

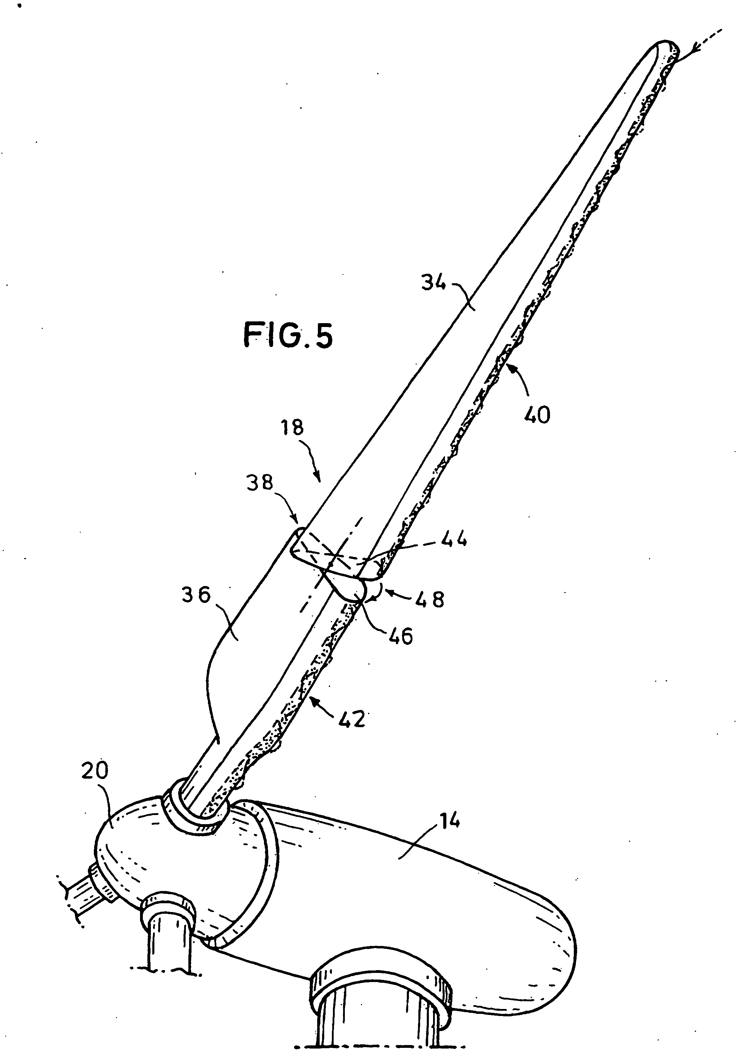

Turning now to Fig. 5, there is shown rotor blade 18 in more detail. Rotor blade 18 consists of two sections, a hub section 36 and a tip section 34 which are connected by a joint 38, formed by an axis made of a carbon fiber material (not shown). At joint 38, the sections 34,36 can rotate against each other to form a so-called "tip brake", used to cause a slow-down or stall effect similar to that used in aircraft rotor blades. The sections 34,36 can be rotated at angles between 0° and 90°, where at 0° the position of tip section 34 is completely in line with the hub section 36, while at the 90° position the tip section 34 is an arrangement perpendicular to that of the hub section 36. The tape 22 consequently is divided into two sections 40,42, which are separated from each other such that their ends 44,46 form a gap 48. The width of the gap 48, i.e. the distance between the ends 44,46 of the tape sections 40,42, depends on the angle of rotation between the tip section 34 and the hub section 36 of the rotor blade 18. In the shown position of about 45° between the tip section 34 and the hub section 36, the width of the gap 48 is about 20 to 30 cm.

When the rotor blade 18 is hit by a lightning strike, this usually occurs at the tip of the rotor blade 18 as shown in Fig. 5. At the tip, tape 22 forms a sharp edge, which attracts the lightning and immediately leads it toward tape 22. This is because the conductive layer 28 provides good electrical conductivity compared to the material of rotor blade 18. Edges such as the one formed at the end of tape 22 at the tip of rotor blade 18 are also known to attract lightning. The electrical charges of the lightning cause the creation of an electrical discharge along the entire tape similar to the one in a fluorescent lamp. This means that the electrical charges are guided to the ground in the air above the length of tape 22 through this discharge and that the tape 22 as such essentially acts as a guiding means protecting the plastic material of the rotor blade 18 upon which it is placed. This means, that the tape 22 as such only carries a very small fraction of the electrical charge as it evaporates. The path of the electrical charges along the surface of tape 22 is not straight. The electrical discharge, as can be seen on photographs taken during tests, statistically jumps at several points on the surface of tape 22. This is shown in Fig. 5. The conductive layer 28 of tape 22 is wide enough to ensure that the electrical charges do not deviate from the path prescribed by tape 22.

At the gap 48 between the ends 44,46 of the sections 40,42 of the tape, the charges also jump the distance of about 20 to 30 cm safely, without causing damage to either of the sections 34,36 of the rotor blade 18. The electrical charges are eventually transported to hub 20, which over a device including a spark gap (not shown) carries the charges into the ground.

Typically, while most of the charge is carried to ground within a very short time below a fraction of a second, the tape 22 is ruptured in several places. This means that after a single lightning strike of high current, the tape 22 or portions of it is expected to be replaced. This, however, is not considered to be a substantial disadvantage, but should be seen as a major advantage as the repair of such a rotor blade 18, which has a tape 22 interrupted at some location, can be achieved easily by simply removing the tape 22 and replacing it by another one. Usually, this would require to clean the surface 32 of the rotor blade 18 prior to the application of the tape 22.

The following tests were conducted with the preferred embodiments. For a high amperage test, used to determine geometry and electrical properties needed, the test samples were prepared as follows:

Flat plates of the rotor blade material, such as glass-fiber reinforced plastic (GRP) of an extension of about 0.5 to 1 m or in the given example of 600 x 600 mm with a thickness of 3 mm are provided, and a tape construction is applied onto them. A conductive tape 22b as described above of a width of 38 mm is applied in the middle so that a distance of 180 mm is obtained towards one edge of the plate. The other end is arranged so that a connection to ground can be established. This relatively small strip is covered with a protective tape 22a as described above providing the abrasion resistance. In this specific configuration the extension of this tape 22a is significantly larger than that of the conductive tape 22b.

At the end of the conductive tape 22b which is 180 mm apart from the edge, an electrode is placed relatively close to the end of this tape 22b so that a spark can be generated. A high voltage is applied and the resulting discharge current are measured so that currents in the order of 200.000 Amps are obtained with an action integral of about 2 x 10⁶A²s. This corresponds to a transmitted charge in the order of 120 Coulombs which is to be considered as a severe strike. Configurations of the described type show typically an initial resistance in the order of a few tenths of ohms/m sufficient to ensure the appropriate guidance of the lightning strike.

When subjecting this configuration to a lightning strike the decisive feature is whether or not the blade material as such will remain completely undamaged. As described above, a discharge is obtained. Photographs have shown what is essentially depicted in Fig. 5, namely that a discharge occurs which is capable of carrying the total charge of about 120 Coulombs which occurs in the air above the thin layer 28 of conductive material which is even covered with an insulating material. Furthermore typically the conductive tape 22b does not survive this test. It is ruptured at some position and together with the abrasion resistant cover tape 22a it is more or less blasted away from the surface 32. However, when using an appropriate configuration of tapes 22a,22b no damage is observed with the blade material. This test gives a means to identify whether a geometrical configuration and the appropriate selection of the electrical properties of the tape material fulfills the requirement to provide protection against lightning.

While the above-described preliminary test method appears to be appropriate for a preselection of the tape material and construction, it may be desirable to subject a selected configuration to a test which is as close as possible to the real use. Such a high voltage test is described in the following:

Tapes 22a,22b as described above are applied onto the leading edge of a rotor blade 18 having a length of e.g. 5 to 6 m. This can, for example, be achieved by applying subsequently the above-described 3M Tape 1190 having the electrical conductivity and covering this tape 22b with the abrasion resistant polyurethane tape PPT 8681 HS. For a good preparation it might be advantageous to clean the surface of the rotor blade with MEK/acetone to ensure a good adhesion. If the adhesion is low which is typical for GRP, adhesion promoter such as tape adhesion promoter 86 from 3M can be used, at least at the tape edges, in order to improve durability. It is preferable to determine the resistance which over lengths of several meters should be in order of several ohms. In case of a tip brake the tape sections 40,42 should be applied independently on both the tip section 34 and the hub section 36 so that in the zero degree position of the tip section 34 the ends 44,46 of the tape sections 40,42 are relatively close to each other. As the results show, the distance is not very critical. The end of the tape 22 near the hub 20 is grounded and the entire rotor blade 18 is then subjected to a high-voltage test. Electrodes are positioned near the tip of rotor blade 18. The electrodes are spheres which are electrically connected to an impulse generator.

In the test, five different configurations of the sphere are used, one direction away from this tip and one configuration about 2.5 m downwards in the direction to the hub 20 having a distance of 1 m with respect to the trailing edge. In two further positions, the sphere was placed beneath the plane given by the blade 18 which is supposed to be the worst case as the electrode is arranged opposite to the side where the lightning protection tape 22 has been applied.

The system is then subjected to a lightning strike by applying a voltage of 1.5 MV which for instance can be obtained by an impulse generator having several stages of 200 kV each. The system allows a measurement of the wave form and the wave could be arranged so that for instance a rise time of 60 micro seconds and the half value after 2500 micro seconds is obtained. The generator is then subjected to both negative and positive polarity pulses. With the above-described tape configuration and the use of GRP rotor blades a 100 % success rate for negative pulses and a 92 % success rate for positive pulses has been observed. A success in this case means that the tape 22 is successful in conducting the lightning and that accordingly no damage of the rotor blade 18 is observed. In case of the use of a tip brake the rate of success depends on the opening angle. If the tip is opened at an angle of 45 degrees, the success rate still stays at 100 % for the negative polarity although an air gap of e.g. 180 mm has to be passed. For the positive polarity the success rate is decreased substantially. This can be improved by providing different geometrical configurations at the ends 44,46 of the tape sections 40,42. It has to be taken care, however, that the carbon fiber axis is not affected by the lightning strike.

In all cases a rupture of the tape 22 occurs as described in the preliminary test method. It is, however, relatively easy to remove the destroyed tape portions and to replace them by a new tape configuration.

Further to the electrical testing a vibration fatigue test can be conducted, in which the system is also submitted to a mechanical test for a rotor blade 18. This is typically a vibration of a 25 m blade 18 with a frequency of 3 Hz for one month continuously which would be equivalent to a life time of the blade of 20 years.

With the above-described tape configuration applied to a 25 m GRP blade no tape lift off was observed after 7 million vibrations.

## Claims

1. Lightning protection apparatus for a rotor blade of a wind turbine, comprising
- an electrical conductor (28) to be arranged along the length of the rotor blade (18),
**characterized in that**
- the conductor (28) is an electrically conductive layer (28) of a tape (22,22b) having also an adhesive layer (26,26b) for adhering the tape (22b) to the outer surface (32) of the rotor blade (18) along the length thereof, the tape (22,22b) further comprising an abrasion-resistant protective layer (30) covering the electrically conductive layer (28).

2. Lightning protection apparatus according to claim 1, **characterized in that** the abrasion-resistant protective layer (30) comprises an abrasion-resistant protective tape (22a) with an adhesive layer (26a) covering the electrically conductive layer (28).

3. Lightning protection apparatus according to claim 1 or 2, **characterized in that** the protective layer (30) or the protective tape (22) is wider than the electrically conductive layer (28) and overlaps the electrically conductive layer (28) along both of its side edges.

4. Lightning protection apparatus according to any one of claims 1 to 3, **characterized in that** the electrically conductive layer (28) has such a geometry and electrical properties that it guides the lightning charges along its surface, while at least a part of the electrically conductive layer (28) evaporates.

5. Lightning protection apparatus according to any one of the preceding claims, **characterized in that** the tape (22,22b) comprises an electrically conductive layer (28) formed as a strip having a width, the strip consisting of metal material and extending along the length of the tape (22,22b).

6. Lightning protection apparatus according to any one of the preceding claims, **characterized in that** the electrically conductive layer (28) of the tape (22,22b) is formed as a mesh or fabric of thin metal wires.

7. Lightning protection apparatus according to any one of the preceding claims, **characterized in that** the electrically conductive layer (28) of the tape (22,22b) is formed as a film of metal material or as a film comprising metal particles dispersed in a polymer layer.

8. Lightning protection apparatus according to any one of the preceding claims, **characterized in that** the conductivity of the electrically conductive layer (30) is several orders of magnitude higher than the electrical conductivity of the rotor blade (18).

9. Lightning protection apparatus according to any one of the preceding claims, for a rotor blade (18) having at least two sections (34,36) connected by a joint (38) **characterized in that** the tape (22,22b) consists of at least two sections (40,42) along the length of the elongated rotor blade (18), which sections (40,42) are separated from each other forming a gap (48) at the joint (38) connecting the sections (40,42) of the elongated rotor blade (18).

10. Lightning protection apparatus according to any one of the preceding claims, **characterized in that** the conductive layer (28) is of a thickness in the range of 0.05 to 0.5 mm, in particular of about 0.1 mm.

11. Lightning protection apparatus according to any one of the preceding claims , **characterized in that** the conductive layer (28) is as a strip extending along the length of the tape (22,22b) and having a width of 1 to 10 cm, in particular 3 to 7 cm and preferably about 4 cm.

12. Lightning protection apparatus according to one or more of the preceding claims, **characterized in that** the conductive layer (28) has a surface resistance of less than 0.1 Ohm/Square and/or the protective layer (30) is a polyurethane layer of a thickness in the range of 0.2 to 1 mm, in particular of about 0.3 mm.

13. Lightning protection apparatus according to one or more of the preceding claims, **characterized in that** the electrically conductive layer (28) consists of copper material.

14. Lightning protection apparatus according to any one of the preceding claims , **characterized in that** the adhesive layer (26,26b) is electrically conductive.

15. Lightning protection apparatus for a rotor blade of a wind turbine, comprising
- an electrical conductor (18) to be arranged along the length of the rotor blade(18),
**characterized in that**
- the conductor comprises a material layer and an adhesive layer for adhering the material layer to the outer surface (32) of the rotor blade (18) along the length thereof and the adhesive layer is electrically conductive.

16. Use of a tape for providing lightning protection to a rotor blade (18) of a wind turbine, the tape (22,22b) comprising a layer of electrically conductive material (28), a layer of adhesive (26,26b), and an abrasion-resistant protective layer (30) covering the electrically conductive layer (28), wherein the tape (22,22b) is applied to the outer surface (32) along the length of the rotor blade (18) so as to stick to the rotor blade (18) by means of the adhesive layer (26,26b).

17. Use of a tape for providing lightning protection to a rotor blade (18) of a wind turbine according to claim 16, **characterized in that** the abrasion-resistant layer (30) is provided as an abrasion-resistant protective tape (22a) with an adhesive layer (26a), wherein the protective tape (22a) is applied to the tape (22b) for covering the same.

18. Use of a tape for providing lightning protection to a rotor blade (18), the tape comprising a material layer and an adhesive layer which is electrically conductive, wherein the tape can be applied to the outer surface along the length of the member so as to stick to the rotor blade (18) by means of the adhesive layer.

## Patentansprüche

1. Blitzschutzvorrichtung für ein Rotorblatt einer Windkraftanlage, aufweisend
- einen elektrischen Leiter (28), der entlang der Länge des Rotorblatts (18) anbringbar ist,
**dadurch gekennzeichnet, dass**
- der Leiter (28) eine elektrisch leitfähige Schicht (28) eines Bandes (22, 22b) ist, das auch eine Haftschicht (26, 26b) zum Ankleben des Bandes (22b) an der äußeren Fläche (32) des Rotorblatts (18) entlang dessen Länge aufweist, wobei das Band (22, 22b) ferner eine abriebfeste Schutzschicht (30) aufweist, welche die elektrisch leitfähige Schicht (28) abdeckt.

2. Blitzschutzvorrichtung nach Anspruch 1, **dadurch gekennzeichnet, dass** die abriebfeste Schutzschicht (30) ein abriebfestes Schutzband (22a) mit einer Haftschicht (26a) aufweist, welches die elektrisch leitfähige Schicht (28) abdeckt.

3. Blitzschutzvorrichtung nach Anspruch 1 oder 2, **dadurch gekennzeichnet, dass** die Schutzschicht (30) oder das Schutzband (22a) breiter ist als die elektrisch leitfähige Schicht (28) und die elektrisch leitfähige Schicht (28) entlang ihrer beiden Seitenränder überlappt.

4. Blitzschutzvorrichtung nach einem der Ansprüche 1 bis 3, **dadurch gekennzeichnet, dass** die elektrisch leitfähige Schicht (28) eine solche Geometrie und solche elektrischen Eigenschaften aufweist, dass sie die Blitzladungen entlang ihrer Fläche leitet, während mindestens ein Teil der elektrisch leitfähigen Schicht (28) verdampft.

5. Blitzschutzvorrichtung nach einem der vorhergehenden Ansprüche, **dadurch gekennzeichnet, dass** das Band (22, 22b) eine elektrisch leitfähige Schicht (28) aufweist, die als ein Streifen ausgebildet ist, der eine Breite aufweist, wobei der Streifen aus metallischem Material besteht und sich entlang der Länge des Bandes (22, 22b) erstreckt.

6. Blitzschutzvorrichtung nach einem der vorhergehenden Ansprüche, **dadurch gekennzeichnet, dass** die elektrisch leitfähige Schicht (28) des Bandes (22, 22b) als ein Netz oder Gewebe dünner Metalldrähte ausgebildet ist.

7. Blitzschutzvorrichtung nach einem der vorhergehenden Ansprüche, **dadurch gekennzeichnet, dass** die elektrisch leitfähige Schicht (28) des Bandes (22, 22b) als ein Film aus metallischem Material oder als ein Film ausgebildet ist, der Metallpartikel enthält, die in einer Polymerschicht verteilt sind.

8. Blitzschutzvorrichtung nach einem der vorhergehenden Ansprüche, **dadurch gekennzeichnet, dass** die Leitfähigkeit der elektrisch leitfähigen Schicht (30) mehrere Größenordnungen höher ist als die elektrische Leitfähigkeit des Rotorblatts (18).

9. Blitzschutzvorrichtung nach einem der vorhergehenden Ansprüche für ein Rotorblatt (18), das mindestens zwei Abschnitte (34, 36) aufweist, die durch ein Verbindungsstück (38) verbunden sind, **dadurch gekennzeichnet, dass** das Band (22, 22b) entlang der Länge des langgestreckten Rotorblatts (18) aus mindestens zwei Abschnitten (40, 42) besteht, wobei die Abschnitte (40, 42) voneinander durch Ausbilden eines Zwischenraumes (48) an der Verbindungsstelle (38), welche die Abschnitte (40, 42) des langgestreckten Rotorblatts (18) verbindet, voneinander getrennt sind.

10. Blitzschutzvorrichtung nach einem der vorhergehenden Ansprüche, **dadurch gekennzeichnet, dass** die leitfähige Schicht (28) eine Dicke im Bereich von 0,05 mm bis 0,5 mm, insbesondere etwa 0,1 mm aufweist.

11. Blitzschutzvorrichtung nach einem der vorhergehenden Ansprüche, **dadurch gekennzeichnet, dass** die leitfähige Schicht (28) ein Streifen ist, der sich entlang der Länge des Bandes (22, 22b) erstreckt und eine Breite von 1 bis 10 cm, insbesondere 3 bis 7 cm und vorzugsweise etwa 4 cm, aufweist.

12. Blitzschutzvorrichtung nach einem oder mehreren der vorhergehenden Ansprüche, **dadurch gekennzeichnet, dass** die leitfähige Schicht (28) einen Flächenwiderstand von weniger als 0,1 Ohm/Flächeneinheit aufweist und/oder die Schutzschicht (30) eine Polyurethanschicht mit einer Dicke im Bereich von 0,2 bis 1 mm, insbesondere von etwa 0,3 mm, ist.

13. Blitzschutzvorrichtung nach einem oder mehreren der vorhergehenden Ansprüche, **dadurch gekennzeichnet, dass** die elektrisch leitfähige Schicht (28) aus Kupfermaterial besteht.

14. Blitzschutzvorrichtung nach einem der vorhergehenden Ansprüche, **dadurch gekennzeichnet, dass** die Haftschicht (26, 26b) elektrisch leitfähig ist.

15. Blitzschutzvorrichtung für ein Rotorblatt einer Windkraftanlage, aufweisend
- einen elektrischen Leiter (18), der entlang der Länge des Rotorblatts (18) anzubringen ist,
**dadurch gekennzeichnet, dass**
der Leiter eine Materialschicht und eine Haftschicht zum Ankleben der Materialschicht an die äußere Fläche (32) des Rotorblatts (18) entlang dessen Länge aufweist und die Haftschicht elektrisch leitend ist.

16. Verwendung eines Bandes zum Schaffen eines Blitzschutzes für ein Rotorblatt (18) einer Windkraftanlage, wobei das Band (22, 22b) eine Schicht eines elektrisch leitfähigen Materials (28), eine Haftschicht (26, 26b) und eine abriebfeste Schutzschicht (30) aufweist, welche die elektrisch leitfähige Schicht (28) abdeckt, wobei das Band (22, 22b) auf der äußeren Fläche (32) entlang der Länge des Rotorblatts (18) so angebracht wird, dass es mittels der Haftschicht (26, 26b) am Rotorblatt (18) haftet.

17. Verwendung eines Bandes zum Schaffen eines Blitzschutzes für ein Rotorblatt (18) einer Windkraftanlage nach Anspruch 16, **dadurch gekennzeichnet, dass** die abriebfeste Schicht (30) als ein abriebfestes Schutzband (22a) mit einer Haftschicht (26a) vorgesehen ist, wobei das Schutzband (22a) auf dem Band (22b) zum Abdecken desselben abgebracht ist.

18. Verwendung eines Bandes zum Schaffen eines Blitzschutzes für ein Rotorblatt (18), wobei das Band eine Materialschicht und eine Haftschicht aufweist, die elektrisch leitfähig ist, wobei das Band so auf der äußeren Fläche entlang der Länge des Bauteils angebracht werden kann, dass es mittels der Haftschicht auf dem Rotorblatt (18) haftet.

## Revendications

1. Dispositif de protection contre la foudre pour une pale de rotor d'une éolienne, comprenant :
- un conducteur électrique (28) à agencer le long de la longueur de la pale de rotor (18),
**caractérisé en ce que** :
- le conducteur (28) est une couche électriquement conductrice (28) d'une bande (22, 22b) comportant aussi une couche adhésive (26, 26b) pour coller la bande (22b) sur la surface extérieure (32) de la pale de rotor (18) le long de la longueur de celle-ci, la bande (22, 22b) comprenant en outre une couche de protection résistant à l'abrasion (30) recouvrant la couche électriquement conductrice (28).

2. Dispositif de protection contre la foudre selon la revendication 1, **caractérisé en ce que** la couche de protection résistant à l'abrasion (30) comprend une bande de protection résistant à l'abrasion (22a) comportant une couche adhésive (26a) recouvrant la couche électriquement conductrice (28).

3. Dispositif de protection contre la foudre selon la revendication 1 ou 2, **caractérisé en ce que** la couche de protection (30) ou la bande de protection (22a) est plus large que la couche électriquement conductrice (28) et déborde de la couche électriquement conductrice (28) le long de chacun de ses deux bords latéraux.

4. Dispositif de protection contre la foudre selon l'une quelconque des revendications 1 à 3, **caractérisé en ce que** la couche électriquement conductrice (28) présente une géométrie et des propriétés électriques telles qu'elle guide les charges de la foudre le long de sa surface, tandis qu'au moins une partie de la couche électriquement conductrice (28) s'évapore.

5. Dispositif de protection contre la foudre selon l'une quelconque des revendications précédentes, **caractérisé en ce que** la bande (22, 22b) comprend une couche électriquement conductrice (28) formée comme un ruban présentant une certaine largeur, le ruban étant constitué d'une matière métallique et s'étendant le long de la longueur de la bande (22, 22b).

6. Dispositif de protection contre la foudre selon l'une quelconque des revendications précédentes, **caractérisé en ce que** la couche électriquement conductrice (28) de la bande (22, 22b) est formée comme un treillis ou un tissu composé de fils de métal fins.

7. Dispositif de protection contre la foudre selon l'une quelconque des revendications précédentes, **caractérisé en ce que** la couche électriquement conductrice (28) de la bande (22, 22b) est formée comme un film de matière métallique ou comme un film comprenant des particules de métal dispersées dans une couche de polymère.

8. Dispositif de protection contre la foudre selon l'une quelconque des revendications précédentes, **caractérisé en ce que** la conductivité de la couche électriquement conductrice (30) est supérieure de plusieurs ordres de grandeur à la conductivité de la pale de rotor (18).

9. Dispositif de protection contre la foudre selon l'une quelconque des revendications précédentes pour une pale de rotor (18) comprenant au moins deux sections (34, 36) reliées par une jonction (38), **caractérisé en ce que** la bande (22, 22b) se compose d'au moins deux sections (40, 42) le long de la longueur de la pale de rotor allongée (18), lesdites sections (40, 42) étant séparées l'une de l'autre en formant un espace (48) à la jonction (38) reliant les sections (40, 42) de la pale de rotor allongée (18).

10. Dispositif de protection contre la foudre selon l'une quelconque des revendications précédentes, **caractérisé en ce que** l'épaisseur de la couche conductrice (28) est comprise dans la gamme allant de 0,05 mm à 0,5 mm, et en particulier égale à environ 0,1 mm.

11. Dispositif de protection contre la foudre selon l'une quelconque des revendications précédentes, **caractérisé en ce que** la couche conductrice (28) est formée comme un ruban s'étendant le long de la longueur de la bande (22, 22b) et dont la largeur est comprise entre 1 cm et 10 cm, en particulier entre 3 cm et 7 cm, et de préférence égale à environ 4 cm.

12. Dispositif de protection contre la foudre selon l'une quelconque des revendications précédentes, **caractérisé en ce que** la couche conductrice (28) présente une résistance de surface inférieure à 0,1 ohm par unité carrée, et/ou la couche de protection (30) est une couche de polyuréthane dont l'épaisseur est comprise entre 0,2 mm et 1 mm, en particulier égale à environ 0,3 mm.

13. Dispositif de protection contre la foudre selon l'une quelconque des revendications précédentes, **caractérisé en ce que** la couche électriquement conductrice (28) est constituée de cuivre.

14. Dispositif de protection contre la foudre selon l'une quelconque des revendications précédentes, **caractérisé en ce que** la couche adhésive (26, 26b) est électriquement conductrice.

15. Dispositif de protection contre la foudre pour une pale de rotor d'une éolienne, comprenant :
- un conducteur électrique (18) à agencer le long de la longueur de la pale de rotor (18);
**caractérisé en ce que** :
- le conducteur comprend une couche de matière et une couche adhésive permettant de coller la couche de matière sur la surface extérieure (32) de la pale de rotor (18) le long de la longueur de celle-ci, la couche adhésive étant électriquement conductrice.

16. Utilisation d'une bande pour assurer la protection contre la foudre d'une pale de rotor (18) d'une éolienne, la bande (22, 22b) comprenant une couche de matière électriquement conductrice (28), une couche adhésive (26, 26b) et une couche de protection résistant à l'abrasion (30) recouvrant la couche électriquement conductrice (28), dans laquelle la bande (22, 22b) est appliquée sur la surface extérieure (32) le long de la longueur de la pale de rotor (18) de manière à être collée sur la pale de rotor (18) par la couche adhésive (26, 26b).

17. Utilisation d'une bande pour assurer la protection contre la foudre d'une pale de rotor (18) d'une éolienne selon la revendication 16, **caractérisée en ce que** la couche résistant à l'abrasion (30) comprend une bande de protection résistant à l'abrasion (22a) comportant une couche adhésive (26a), la bande de protection (22a) étant appliquée sur la bande (22b) de manière à recouvrir celle-ci.

18. Utilisation d'une bande pour assurer la protection contre la foudre d'une pale de rotor (18), la bande comprenant une couche de matière et une couche adhésive électriquement conductrice, dans laquelle la bande peut être appliquée sur la surface extérieure le long de la longueur de l'élément de manière à être collée sur la pale de rotor (18) par la couche adhésive.
